# EUROPÄISCHE PATENTSCHRIFT

(11) **EP 2 507 134 B1**
(45) Veröffentlichungstag und Bekanntmachung des Hinweises auf die Patenterteilung: **02.07.2014**
(21) Anmeldenummer: 10773863.5
(22) Anmeldetag: 03.11.2010
(51) Int. Cl.: B64F 1/22, B64F 1/36

(54) **MULTIFUNKTIONS-FLUGZEUGSCHLEPPER UND VERFAHREN**
MULTI-FUNCTION AIRCRAFT TRACTOR AND METHOD
TRACTEUR D'AVION MULTIFONCTION ET PROCÉDÉ

(30) Priorität: 02.12.2009 DE 102009056522; 12.05.2010 DE 102010020328
(43) Veröffentlichungstag der Anmeldung: 10.10.2012
(73) Patentinhaber: Diehl Aerospace GmbH, 88662 Überlingen (DE); Liebherr-Aerospace Lindenberg GmbH, 88161 Lindenberg (DE)
(72) Erfinder: KNEPPLE, Ronny, 88662 Überlingen (DE); HOFFMANN, Michael, 88662 Überlingen (DE); PETERSEN, Benno, 88634 Herdwangen (DE); ZIEHM, Sebastian, 88178 Heimenkrich (DE); BAUR, Dietmar, 88145 Opfenbach (DE); METZLER, Dirk, 88179 Oberreute (DE)
(74) Vertreter: Riepl, Hubert Johann
(86) Internationale Anmeldenummer: PCT/EP2010/006699
(87) Internationale Veröffentlichungsnummer: WO 2011/066891

(56) Entgegenhaltungen:
- EP-A1- 0 649 787
- WO-A1-02/16203
- DE-B- 1 122 383
- GB-A- 2 267 068
- US-A- 2 993 549
- US-A- 3 866 701
- US-A- 4 113 041
- US-B1- 6 424 891

## Beschreibung

Die Erfindung betrifft einen Flugzeugschlepper und ein Verfahren zur bodengebundenen Bewegung daran angekoppelter Flugzeuge, insbesondere auf Flugfeldern.

Aus EP 0 649 787 A1 geht ein Schleppfahrzeug für Flugzeuge hervor, das zum Bewegen eines Flugzeuges auf einem Flugfeld ausgebildet ist. Das Schleppfahrzeug umfasst eine Kupplungseinheit zum Ankoppeln des Flugzeugs. Ein ähnliches Schleppfahrzeug geht aus der GB 2 267 068 A hervor.

Aus der US 4,113,041 A ist ein Schleppfahrzeug für Flugzeuge bekannt, welches ein daran angekoppeltes Flugzeug mit Energie versorgen kann. Auch aus der US 2,993,549 ist ein Schleppfahrzeug für Flugzeuge bekannt, welches einen Generator umfasst, mit welchem das Flugzeug mit Energie versorgt werden kann.

Aus der US 6,424,891 B1 und der WO 02/16203 A1, welche die Merkmale der Präampel des Anspruchs 1 zeigt, sind Fahrzeuge zur bodengebundenen Versorgung von Flugzeugen bekannt.

Aus der US 3,866,701 A ist ein Kleinschlepper zum Ziehen von Helikoptern bekannt, wobei der Schlepper einen Generator umfasst, mit welchem ein Helikopter insbesondere beim Startvorgang mit Energie versorgt werden kann.

Aus der DE 1 122 383 ist ein Trägerfahrzeug für lotrecht startende Flugzeuge bekannt. Im Bodenbetrieb kann das Flugzeug vom Trägerfahrzeug mit Energie und anderen Betriebsstoffen versorgt werden.

Der Erfindung liegt die Aufgabe zugrunde, einen alternativen Flugzeugschlepper anzugeben, mit welchem Flugzeuge auf Flugfeldern bewegt werden können. Insbesondere soll ein Flugzeugschlepper angegeben werden, mit welchem zumindest die bodengebundene Flugzeugbewegung vergleichsweise komfortabel und emissionsarm erfolgen kann.

Diese Aufgabe wird gelöst durch die Merkmale der unabhängigen Ansprüche 1 und 11. Ausgestaltungen der Erfindung ergeben sich aus den Unteransprüchen.

Gemäß dem unabhängigen Patentanspruch 1 ist ein Flugzeugschlepper zur bodengebundenen Bewegung daran angekoppelter Flugzeuge, insbesondere auf Flugfeldern und Flughäfen, vorgesehen. Der Flugzeugschlepper umfasst ein Antriebsaggregat zum Antrieb wenigstens eines Antriebrads oder eines Radsatzes des Schleppers. Ferner umfasst der Flugzeugschlepper wenigstens eine Kupplungseinheit zum Ankoppeln an einem Flugzeugteil. Bei dem Flugzeugteil kann es sich um eine am Flugzeug oder dessen Fahrwerk vorgesehene korrespondierende Kupplungseinheit oder um ein sonstiges Element, wie z. B. ein Bugrad, handeln, welches derart mit dem Flugzeugschlepper gekoppelt werden kann, dass das Flugzeug durch Fahrbewegungen des Flugzeugschleppers bewegt werden kann.

Ferner ist auf oder an dem Flugzeugschlepper eine, Energiefunktionseinheit angeordnet, welche derart ausgebildet ist, dass diese, insbesondere bereits im Schleppbetrieb, an wenigstens ein Aggregat des Flugzeuges ankoppelbar oder angekoppelt ist.

Die Energiefunktionseinheit ist vom Flugzeugschlepper absetzbar ausgebildet derart, dass die mit einem in Parkposition verbrachten Flugzeug verbundene Energiefunktionseinheit vom Flugzeugschlepper abgekoppelt werden kann und das jeweilige Flugzeug weiter versorgt.

Der vorgeschlagene Flugzeugschlepper ermöglicht nach einer bereits im Stand der Technik bekannten Art und Weise ein bodengebundenes Ziehen und Schieben eines Flugzeuges. Darüber hinaus kann die Energiefunktionseinheit, bereits während des Schleppbetriebes in Interaktion oder Wirkverbindung mit dem angekoppelten Flugzeug treten. Dadurch wird es unter anderem ermöglicht, frühzeitig - bereits während einer Taxi-In Phase, d. h. in einer Phase, in welcher das Flugzeug vom Rollfeld zu einer Parkposition gebracht wird, - das Flugzeug über die Versorgungseinheit beispielsweise mit elektrischer Energie und/oder sonstigen Medien, wie z. B. Wasser, Luft zur Belüftung der Flugzeugkabine usw., und Energieformen, welche beispielsweise zur Klimatisierung der Flugzeugkabine erforderlich sind, zu versorgen.

Dadurch, dass bereits während der Taxi-In Phase insbesondere die Energiefunktionseinheit bzw. elektrische Versorgung des Flugzeugs zumindest teilweise gewährleistet werden kann, wird es ermöglicht, das oder die Triebwerke, insbesondere Hilfstriebswerke, des Flugzeuges mit einer verminderten Leistung, im Leerlauf zu fahren oder gänzlich abzustellen.

Bei den bekannten Flugzeugschleppern ist der Betrieb eines oder mehrerer Triebwerke während der Taxi-In Phase notwendig, um während der bodengebundenen Bewegung des Flugzeugs den Betrieb der Verbraucher und Aggregate innerhalb des Flugzeugs wie Klimaanlage, Steuerungselektronik, Beleuchtung usw. aufrecht zu erhalten.

Mit dem vorgeschlagenen Flugzeugschlepper ist es nun möglich, den Betrieb der Verbraucher oder Aggregate über die Energiefunktionseinheit zumindest teilweise sicherzustellen, so dass das oder die Triebwerke zumindest teilweise abgeschaltet oder mit verringerter Leistung betrieben werden können. Dieses Vorgehen ermöglicht zum Beispiel folgende Vorteile:
- Reduzierung des Lärmpegels, da die Versorgung über die externe Energieversorgungseinheit, geräuschärmer ausgeführt werden kann, als mit Betrieb der Triebwerke, selbst wenn diese im Leerlaufbetrieb fahren.
- Ersparnis von Flugzeugtreibstoff, da mit einer externen Energiefunktionseinheit, ein besserer Wirkungsgrad erreicht werden kann, wie beispielsweise mit einem ein Schubtriebwerk am Boden, da letzteres durch seine Systemauslegung bedingt in dieser Phase ineffizient arbeitet, da es für den schnellen Reiseflug in großen Höhen optimiert ist. Die Schadstoff- und Lärmemissionen sind deshalb bei einem am Boden betriebenen Schubtriebwerk überproportional hoch.

Insgesamt ist es damit möglich, dass während eines Bodenaufenthaltes des Flugzeuges (dem Turn Around) eine frühzeitige Abschaltung der Triebwerke und/oder gegebenenfalls am Flugzeug vorhandener Hilfstriebwerke (Auxiliary Power Units APU) erfolgen kann oder diese in einen Leerlaufbetrieb umgeschaltet werden können. Mit dem vorgeschlagenen Flugzeugschlepper kann während des Turn Around des Flugzeuges auf z. B. einem Flugfeld insgesamt der Lärmpegel, der Flugzeugtreibstoffverbrauch, die insgesamte Bodenaufenthaltszeit, sowie die Gefahr der Beschädigung der Schubtriebwerke, beispielsweise eine Beschädigung durch so genannte "Foreign Object Damages", signifikant reduziert werden. Die Bodenaufenthaltszeit kann beispielsweise dadurch verringert werden, dass bereits während der Taxi-In Phase, oder allgemein während der Kopplung des Flugzeugs an die Energiefunktionseinheit, im Flugzeug mitgeführte Verbrauchsmedien wie Wasser und dgl. ausgetauscht oder aufgefüllt werden.

Ähnliches gilt selbstverständlich auch während der Taxi-Out Phase, die die Strecke von der Parkposition des Flugzeugs hin zur Rollbahn beschreibt, da für die Zurücklegung dieser Strecke nicht die Schubtriebwerke zur Bewegung und Versorgung des Flugzeugs benötigt werden, sondern der Flugzeugschlepper zusammen mit der Energiefunktionseinheit das übernimmt. Während der Führung des Flugzeuges durch den Flugzeugschlepper können sich die Flugzeugführer anderen Aufgaben widmen, insbesondere während der Taxi-In Phase. Die Energiefunktionseinheit kann - sofern erforderlich - ferner auch während der zwischen Taxi-In und Taxi-Out Phase, im Allgemeinen während des gesamten Bodenaufenthalts zur entsprechenden Versorgung des Flugzeugs verwendet werden.

Die Energiefunktionseinheit kann darüber hinaus auch erste Prüfungsroutinen, beispielsweise zur Systemprüfung elektronischer Flugzeugkomponenten, während des Schleppens des Flugzeugs an diesem ausführen. Damit wird zumindest teilweise eine Prüftätigkeit von der im Stand der Technik lediglich in der Parkposition ausführbaren Ort bereits in die Taxi-In und gegebenenfalls auch in die Taxi-Out Phase übertragen, so dass auch dadurch die Gesamtzeit des Turn Around des Flugzeugs reduziert werden kann.

Ein weiterer Vorteil ist darin zu sehen, dass insbesondere die Verwendung der Schubtriebwerke für die Taxi-In und Taxi-Out Phase einen systemauslegungsbedingt "untypischen" Betrieb des Schubtriebwerkes darstellt und damit während dieser Betriebsphase ein erhöhter Verschleiß festgestellt werden kann. Durch Vermeidung oder zumindest einer signifikanten Reduzierung der Betriebszeit der Schubtriebwerke während des Turn Arounds erhöht damit die Standfestigkeit der Schubtriebwerke und gleichzeitig deren Wartungsintervalle.

Es soll bemerkt werden, dass sich die genannten Vorteile nicht nur auf bodengebundene Flugzeugbewegungen in der Taxi-In und Taxi-Out Phase beschränken, sondern für jegliche Flugzeugbewegungen sowie für Standzeiten gelten. Da die Energiefunktionseinheit absetzbar ausgebildet ist, ist es möglich, dass die mit einem in Parkposition verbrachten Flugzeug verbundene Versorgungseinheit vom Flugzeugschlepper abgekoppelt wird und das jeweilige Flugzeug weiter versorgt. Der Flugzeugschlepper kann dann für weitere Flugzeugbewegungen eingesetzt werden, beispielsweise nachdem dieser zuvor eine neue Energiefunktionseinheit aufgenommen hat. Die Absetzbarkeit ist weiterhin von Vorteil, wenn für verschiedene Flugzeugtypen verschiedene Energiefunktionseinheiten erforderlich sind. Vorzugsweise ist die Energiefunktionseinheit jedoch so ausgelegt, dass diese weitgehend universell für eine Vielzahl an Flugzeugtypen verwendet werden kann.

In einer Ausführungsform ist es vorgesehen, dass die Ankopplung der Energiefunktionseinheit, an den wenigstens einen Verbraucher oder das wenigstens eine Aggregat des Flugzeuges selbsttätig und synchron mit dem Ankoppeln der Kupplungseinheit an dem Flugzeugteil erfolgt. Da sowohl die mechanische Ankopplung des Flugzeugs an dem Flugzeugschlepper als auch die Herstellung einer Verbindung zwischen der Energiefunktionseinheit auf dem Schlepper und der entsprechenden Schnittstelle an dem Flugzeug als ein gezielter und definiert ablaufender Prozess angesehen werden kann, ist es vorteilhaft, diese beiden Prozesse möglichst zeitgleich oder annähernd zeitgleich durchzuführen.

Eine weitere Ausführungsform der Erfindung sieht vor, an dem Flugzeugschlepper oder der Versorgungseinheit wenigstens einen Energie- und/oder Medienübertragungsadapter vorzusehen, der mit einem Gegenadapter am Flugzeug verbindbar ist, um Energie oder sonstige Medien, oder elektrische Signale zwischen der Energiefunktionseinheit bzw. dem Flugzeugschlepper und dem Flugzeug auszutauschen. Der Medienübertragungsadapter kann sowohl elektrisch, elektronisch, nach Art eines Lichtleiters, schlauchoder rohrartige Medienüberleitungsmittel umfassen. Vorzugsweise kommen bei dem Energie- und/oder Medienübertragungsadapter bereits verfügbare standardisierte Schnittstellen zum Einsatz. Solche Schnittstellen existieren beispielsweise für die bodengebundene Versorgung eines Flugzeugs mit elektrischer Energie (Ground Power Supply) oder Frischluft (Ground Air Supply). Bei entsprechender Ausgestaltung können mittels des Energie- und/oder Medienübertragungsadapters Energie, digitale oder analoge Informationen oder Signale sowie Medien wie Flüssigkeiten, Gase usw. übertragen werden. Die Übertragung kann je nach Bedarf entweder unidirektional, d. h. von der Energiefunktionseinheit zum Flugzeug oder umgekehrt, oder auch bidirektional ausgebildet sein. Damit können insbesondere Wasser, insbesondere Brauchwasser, Inertgas, Strom, Steuerungs- und/oder Regelungssignale, Prüfsignale und/oder Klimaanlagenmedien, wie Kühlmedium und/oder Luft und dgl. übertragen werden. Eine bidirektionale Übertragung kann beispielsweise bei Klimaanlagenmedien verwendet werden. Unidirektionale Verbindungen können beispielsweise bei der Entleerung von Abwassertanks und bei der Auffüllung von Brauchwassertanks des Flugzeugs verwendet werden.

Die Energiefunktionseinheit, kann, worauf weiter unten noch näher eingegangen wird, ein Brennstoffzellensystem umfassen, mit welchem elektrische Energie, thermische Energie, Wasser und/oder Inertgas geliefert werden kann.

In einer weiteren Ausgestaltung ist vorgesehen, dass wenigstens eine Funktion der Energiefunktionseinheit, zumindest teilweise von wenigstens einer Steuereinheit eines angekoppelten Flugzeugs steuerbar ist. Damit kann beispielsweise nach der Koppelung der Energiefunktionseinheit mit dem Flugzeug, insbesondere mit dessen Verbraucher, Aggregaten und dgl., der Pilot des Flugzeugs eine entsprechende Versorgung dieser Aggregate und dgl. durch die Energiefunktionseinheit ausführen.

In einer weiteren Ausgestaltung ist vorgesehen, dass ein Ladeausgang der Energiefunktionseinheit, mit einem Ladeeingang eines Batteriesatzes des Flugzeugschleppers verbunden ist und das Antriebsaggregat des Flugzeugschleppers einen elektrischen Antriebsmotor umfasst, der aus dem Batteriesatz gespeist wird. Der Batteriesatz des Flugzeugschleppers ist vorzugsweise ein Akku. Durch eine entsprechende Verbindung des Batteriesatzes des Fahrzeugschleppers mit der Energiefunktionseinheit kann die Energiefunktionseinheit sowohl zur Versorgung des Flugzeugs als auch zeitlich versetzt oder gleichzeitig zur Versorgung des Batteriesatzes bzw. des mit diesem in Wirkverbindung stehenden elektrischen Antriebsmotors verwendet werden. Damit stellt die Energiefunktionseinheit beispielsweise gleichzeitig eine Versorgung des Flugzeugs als auch eine Antriebsenergie zum Bewegen des Flugzeugschleppers zur Verfügung. Dadurch, dass sowohl die Versorgung des Flugzeugs als auch die Bewegung des Fahrzeugschleppers und damit auch indirekt die Bewegung des Flugzeugs insgesamt über einen elektrisch wirkenden Antriebsmotor und eine Energiefunktionseinheit ausführbar ist, kann die Geräuschemission zumindest während der Taxi-In und Taxi-Out Phase, im Allgemeinen währen der gesamten bodengebundenen Flugzeugbewegung durch den Flugzeugschlepper, signifikant reduziert werden.

Hierbei ist es von Vorteil, wenn bei angekoppelter Energiefunktionseinheit der elektrische Antriebsmotor unmittelbar aus der Energiefunktionseinheit gespeist wird. Daneben kann während der Anordnung der Energiefunktionseinheit am Flugzeugschlepper ein Laden des Flugzeugschleppers durchgeführt werden.

Da die Energiefunktionseinheit lösbar am Flugzeugschlepper angeordnet ist, kann diese beispielsweise in der Parkposition des Flugzeugs bei diesem verbleiben, so dass der Flugzeugschlepper ohne das Flugzeug und Versorgungseinheit zu einem weiteren Einsatz bewegt werden kann. Das Eigengewicht der Energiefunktionseinheit und die für die Bewegung des Flugzeugs notwendige Zugkraft verlangen dem Flugzeugschlepper die größten Leistungen ab. So kann der Flugzeugschlepper ohne zu schleppendes Flugzeug und ohne die Versorgungseinheit mit einem entsprechend geringer dimensionierten Batteriesatz versehen sein, um zu einem weiteren Einsatz, beispielsweise zu einem Ort zur Aufnahme einer weiteren Versorgungseinheit, verlagert zu werden. Dort angelangt, kann die weitere Energiefunktionseinheit an den Flugzeugschlepper gekoppelt werden, so dass die dem Flugzeugschlepper abverlangte höhere Leistung durch das zu tragende Eigengewicht der weiteren Versorgungseinheit durch entsprechende zur Verfügungsstellung von Energie an den Batteriesatz des Flugzeugschleppers diesen betriebsfähig halten kann.

Während des Lösens der Kupplungseinheit des Flugzeugschleppers vom Flugzeug kann die Kopplung zwischen der Energiefunktionseinheit und dem Flugzeug, beispielsweise über den Energie- und/oder Medienübertragungsadapter und dem Gegenadapter, beibehalten werden. Darüber hinaus kann auch während des Absetzens der Energiefunktionseinheit vom Flugzeugschlepper die Wirkverbindung, d. h. der Austausch von Energie, Medien und dgl., zwischen der Energiefunktionseinheit und dem Flugzeug beibehalten werden. Grundsätzlich kann vom Beginn der Taxi-In bis zum Ende der Taxi-Out Phase eine kontinuierliche Verbindung zwischen dem Flugzeug und der Versorgungseinheit gewährleistet werden. Damit werden weniger Docking-Manöver am Flugzeug und weniger Bodenversorgungseinrichtungen in der Park-Position notwendig, was sich vorteilhaft auf die Turn-Around Zeit des Flugzeugs auswirken kann.

In einer vorteilhaften Ausführungsform umfasst die Energiefunktionseinheit ein integriertes Brennstoffzellenenergieerzeugungssystem und/oder eine Klimaanlage und/oder einen Medientank und/oder einen Inertgastank. Die Versorgungseinheit kann auch eine Mehrzahl, im Allgemeinen also mindestens eines der aufgezählten Komponenten umfassen. Ein Medientank kann beispielsweise sowohl ein Medium wie beispielsweise Wasser einem Flugzeug zuführen, als auch alternativ oder gleichzeitig Abwasser oder sonstige zu wechselnde Flüssigkeiten vom Flugzeug aufnehmen. Vom Brennstoffzellenenergieer-zeugungssystem bei dessen Betrieb laufend erzeugte thermische Energie, erzeugtes Wasser oder Inertgas können unmittelbar dem Flugzeug zugeführt werden.

Vorzugsweise ist die Energiefunktionseinheit derart am Flugzeugschlepper angeordnet, dass sie sowohl einfach an- und abgekoppelt werden kann und gleichzeitig lasterhöhend im Bezug auf wenigstens eine Antriebsachse des Flugzeugschleppers wirkt. Insbesondere kann zur Lasterhöhung ein in die Energiefunktionseinheit integrierter Metallhybridspeicher zur Versorgung eines Brennstoffzellensystems mit Wasserstoff verwendet werden. Dieser bietet hohe Sicherheit und große volumetrische Speicherdichte bei hohem Gewicht, wodurch Betonbeschwerungen, wie bei konventionellen Flugzeugschleppern üblich, entfallen können. Die im Stand der Technik dargelegten Flugzeugschlepper zeichnen sich durch ein relativ hohes Eigengewicht aus, da für das Schleppen und Schieben von Flugzeugen ein entsprechendes Gegengewicht am Schlepper vorgehalten werden muss, um das gezielte Bewegen des Flugzeugs zu ermöglichen. Diese Gewichtsfunktion kann zumindest teilweise von der lösbar am Schlepper angeordneten Energiefunktionseinheit erfüllt werden. Damit kann der Energiebedarf eines Flugzeugschleppers bei Leerfahrten, d. h. ohne Energiefunktionseinheit und ohne zu schleppendes Flugzeug, reduziert werden, da dieser für reine Leerfahrten i.d.R keine Energiefunktionseinheit benötigt und damit signifikant in seinem Gesamtgewicht reduziert ist.

Die Energiefunktionseinheit ist vorteilhafterweise so ausgebildet, dass diese auf oder an einer Ladeadaptionseinheit ab- und/oder ansetzbar ist. An einer derartigen Ladeadaptionseinheit kann die Energiefunktionseinheit geparkt werden, um letztere zu versorgen oder aufzufüllen, d. h. wieder betriebsfertig zu machen. Beispielsweise können das Brennstoffzellensystem geladen, die Klimaanlage gewartet, Flüssigkeiten ausgetauscht werden usw.. Die Betankung und/oder Aufladung der Versorgungseinheit kann unabhängig von der Turn Around Zeit erfolgen.

Der Patentanspruch 11 betrifft ein Verfahren zum bodengebundenen Bewegen von Flugzeugen, insbesondere auf Flugfeldern wobei ein Flugzeugteil an wenigstens einer Kupplungseinheit eines Flugzeugschleppers angekoppelt wird. Dieses Verfahren sieht vor, dass die bodengebundene Bewegung oder der Transport des Flugzeugs, beispielsweise von einer Parkposition zu einer Startposition (Taxi-Out) und/oder von einer Landeposition zu einer Parkposition (Taxi-In), mit angekoppelten Flugzeugschlepper unter ausschließlichem Antrieb eines Antriebsaggregats des Flugzeugschleppers erfolgt und Flugzeugaggregate und/oder Flugzeugverbraucher an eine Energiefunktionseinheit, des Flugzeugschleppers angekoppelt sind bzw. werden.

Nach dem vorgeschlagenen Verfahren ist die Energiefunktionseinheit vom Flugzeugschlepper absetzbar ausgebildet derart, dass die mit einem in Parkposition verbrachten Flugzeug verbundene Energiefunktionseinheit vom Flugzeugschlepper abgekoppelt werden kann und das jeweilige Flugzeug weiter versorgt.

Nach einer Ausgestaltung des Verfahrens kann es vorgesehen sein, dass die absetzbare Energiefunktionseinheit unter Aufrechterhaltung der Ankopplung derselben an das Flugzeug, insbesondere an dessen Verbraucher und/oder Aggregate, vom Flugzeugschlepper abgesetzt und/oder eine, insbesondere an das Flugzeug angekoppelte, abgesetzte Energiefunktionseinheit von diesem aufgenommen wird.

Ferner kann/können in einer Variante des Verfahrens zwischen der Energiefunktionseinheit und dem Flugzeug, unidirektional und/oder bidirektional, Energie, insbesondere elektrische Energie, elektrische Signale, und/oder Betriebsmittel, insbesondere gasförmige und/oder flüssige Medien, insbesondere zur Klimatisierung und/oder Befüllung und/oder Leerung von Medientanks (15), übertragen oder ausgetauscht werden. Die elektrische Energie und dgl. können dazu verwendet werden, beim bodengebundenen Aufenthalt des Flugzeugs den Betrieb von Flugzeugaggregaten, Flugzeugverbrauchern und Flugzeugversorgungseinrichtungen usw. zumindest teilweise aufrecht zu erhalten. Ferner können Medientanks wie Brauchwassertanks oder Abwassertanks und dgl. gefüllt bzw. entleert werden, wodurch die erforderliche Standzeit des Flugzeugs am Boden verringert werden kann. Der Austausch zwischen Energiefunktionseinheit und Flugzeug kann während des Schleppvorgangs, insbesondere in der Taxi-In und Taxi-Out Phase, und/oder während der Standphase oder Parkposition des Flugzeugs erfolgen.

Vorteile und vorteilhafte Wirkungen des Verfahrens ergeben sich insbesondere aus den Ausführungen zum Flugzeugschlepper und dessen Ausgestaltungen. Das vorgeschlagene Verfahren und dessen Ausgestaltungen sind ferner deshalb vorteilhaft, weil diese auf Flughäfen sukzessive eingeführt werden können, da weder signifikante, noch inkompatible Eingriffe in die existierende technische Flughafeninfrastruktur erforderlich sind. Die für das vorgeschlagene Verfahren notwendigen technischen Veränderungen betreffen im Wesentlichen ausschließlich den Flugzeugschlepper sowie die hierfür auszulegende Energiefunktionseinheit und gegebenenfalls entsprechend optimierte Schnittstellen am Flugzeug und/oder einer Ladeadaptionseinheit.

Ein weiterer Vorteil des Verfahrens und dessen Ausgestaltungen ist darin zu sehen, dass bei Ausfall einer Energiefunktionseinheit dieses vergleichsweise einfach ersetzt werden kann, wobei die Einsatzfähigkeit des Flugzeuges selbst unbetroffen bleibt. Es besteht damit keine sogenannte "Dispatch-Relevanz". Im Gegensatz dazu hat autonomes Taxi-In und Taxi-Out durch Antrieb des Flugzeugfahrwerks eine hohe Dispatch-Relevanz.

Ferner ist es vorteilhaft, dass das Verfahren keine Wartungsrelevanz hat. Die Wartung des Multifunktions-Flugzeugschleppers oder seiner Versorgungseinheit kann zeitlich entkoppelt vom Flugzeug und dessen Aufenthalt am Boden erfolgen. Im Gegensatz dazu hat die Wartung eines autonomen Taxi-In eine hohe Wartungsrelevanz.

Eine weitere vorteilhafte Ausführungsform sieht vor, dass die kinetische Energie beim Bremsen großer Massen, wie die bewegter Flugzeugmassen, durch Rekuperation gewonnne und gespeichert werden kann. Beispielsweise kann beim Abbremsen des im Schleppbetrieb fahrenden Flugzeugschleppers durch das Abbremsen seines Eigengewichtes und ggf. des zusätzlich von ihm gezogenen Flugzeuges durch eine entsprechende Rekuperation mit geeigneten Wandlern als Energie zurückgewonnen werden und beispielsweise dem Batteriesatz des Flugzeugschleppers zugeführt werden.

Wenn die Energiefunktionseinheit ein Brennstoffzellensystem umfasst, ist es vorteilhaft, wenn der Wasserstoff für das Brennstoffzellensystem in zumindest einer der nachfolgenden Möglichkeiten zur Verfügung gestellt wird: Druckwasserstoff, kryogener Wasserstoff in flüssiger Phase (LH₂), Wasserstoffreformat (H₂)aus einem Reformator Die Energiefunktionseinheit kann mit ihrem Brennstoffzellensystem, während sie mit dem Flugzeugschlepper gekoppelt ist, dessen Batterien nachladen, dies kann optional auch per Steckverbindung und/oder via Induktionsladetechnik erfolgen.

Durch den erfindungsgemäßen Flugzeugschlepper mit der Energiefunktionseinheit kann ein zusätzliches Lotsenfahrzeug ersetzt werden, da der Flugzeugschlepper auch als Lotsenfahrzeug verwendet werden kann.

Die Energiefunktionseinheit kann verbundenem Zustand mit dem Flugzeug beispielsweise die elektrische Flugzeugklimaanlage - falls das Flugzeug mit einer solchen ausgerüstet ist - antrieben, was notwendig ist, um eine, insbesondere noch oder wieder mit Passagieren besetzte, Flugzeugkabine während des Bodenaufenthalts, insbesondere während des Taxi-In und/oder Taxi-Out zu konditionieren und mit Frischluft zu versorgen. Auch kann über die Versorgungseinheit Sauerstoff abgereichertes Gas zur Inertisierung des Flugzeugkraftstofftanks zur Verfügung gestellt werden.

Unter einem Aggregat des Flugzeugs oder Flugzeugaggregat werden im allegemeinen Sinne insbesondere elektrische Verbraucher jeglicher Art, Versorgungseinrichtungen, insbesondere für Klimaanlage, Flugzeugtoiletten und Flugzeugwaschräume, und sonstige Einrichtungen betreffend insbesondere technische Gase oder Flüssigkeiten, wie Bremsflüssigkeit und dgl., verstanden die im Zusammenhang mit dem ordnungsgemäßen Betrieb des Flugzeugs stehen.

Neben der Stromversorgung des Flugzeugschleppers während der Kopplung des Flugzeugschleppers mit der Energiefunktionseinheit kann es vorteilhaft sein, wenn darüber hinaus weitere Medien- und/oder Energieversorgungsaspekte gekoppelt sind. So kann beispielsweise der Flugzeugschlepper und der diesen bedienende Flugzeugschlepperführer mit einer Klimaanlage der Energiefunktionseinheit mit klimatisierter Luft versorgt werden. Auch kann bei lösbarer Anbindung der Energiefunktionseinheit an dem Flugzeugschlepper ein entsprechender Puffer für das jeweilige Medium und/oder die jeweilige Energie am Flugzeugschlepper vorgesehen sein, so dass der Puffer im gekoppelten Zustand des Flugzeugschleppers mit der Energiefunktionseinheit aufgefüllt werden kann und während der Abwesenheit der Energiefunktionseinheit das Medium und/oder die Energie für den Flugzeugschlepper aus dem Puffer entnommen werden kann.

Nachfolgend werden Ausführungsbeispiele der Erfindung werden anhand der anhängenden Figuren beschrieben. Es zeigen:
- Fig. 1: eine schematische Darstellung der unterschiedlichen Phasen bei der Abfertigung eines Flugzeugs an einem Flughafen;

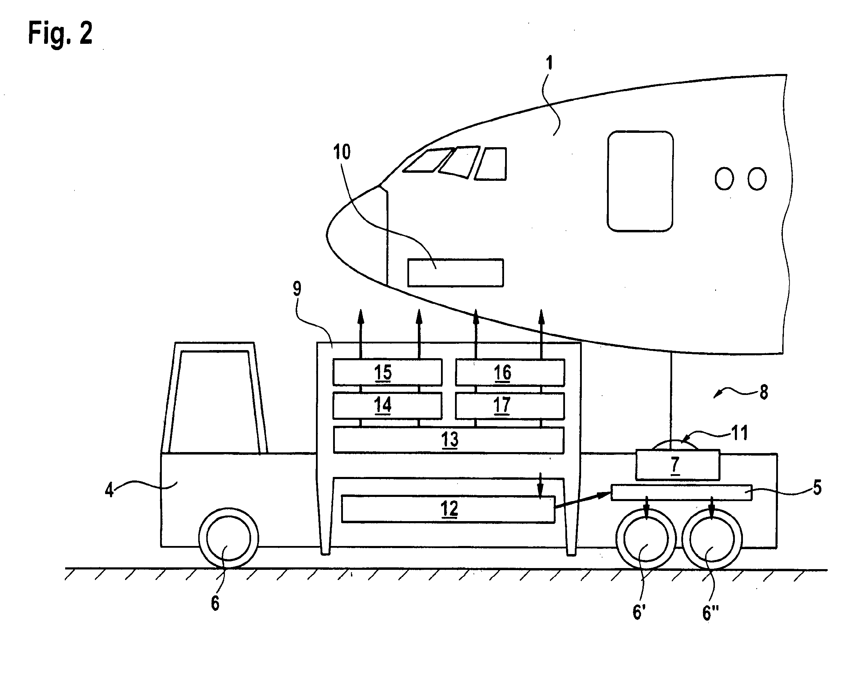

- Fig. 2: eine schematische Darstellung eines mit einem Flugzeug verbundenen Flugzeugschleppers mit einer Energiefunktionseinheit; und

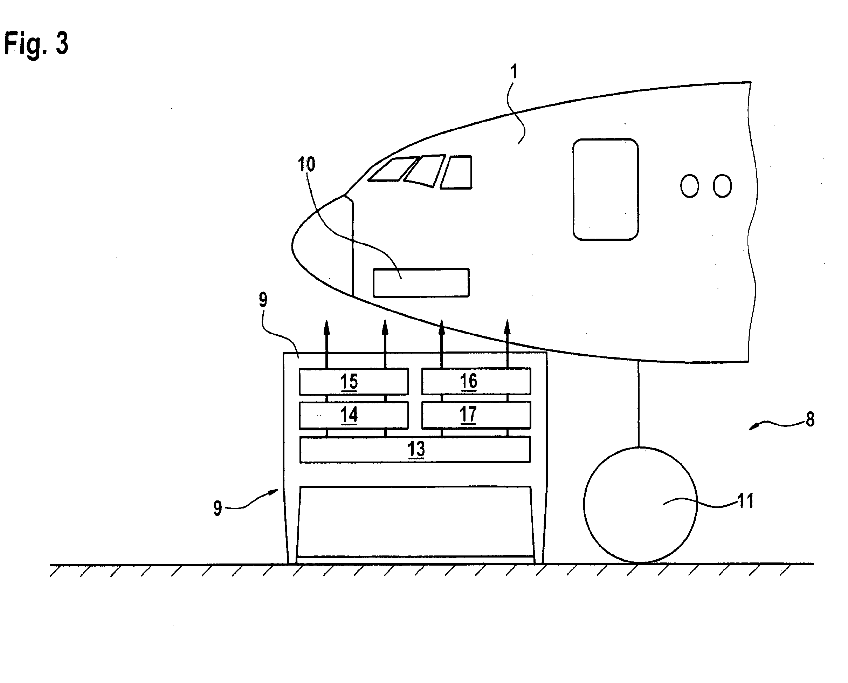

- Fig. 3: eine schematische Darstellung einer mit einem Flugzeug verbundenen Energiefunktionseinheit in einer Parkposition des Flugzeugs.

Es wird darauf hingewiesen, dass die Figuren zumindest teilweise lediglich schematische Darstellungen wiedergeben und dass die spezielle Auswahl an dargestellten Elementen keine Beschränkung des Umfangs der Erfindung bedeuten soll.

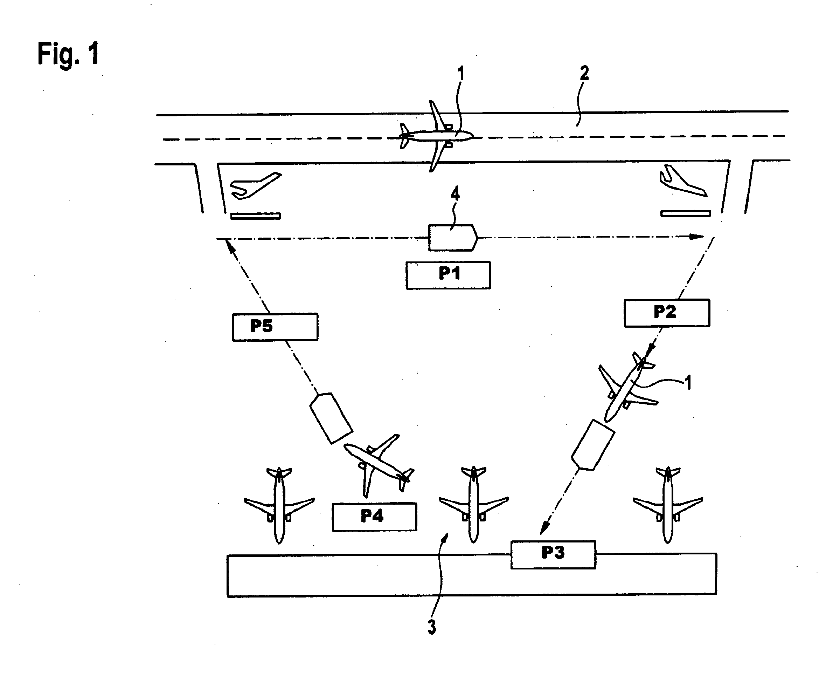

In Figur 1 sind einzelne Stationen eines Flugzeugs 1 vor und während seines Aufenthaltes in einem Flughafen dargestellt. Während des Landeanflugs befindet sich ein zum bodengebundenen Bewegen des Flugzeugs 1 vorgesehener Flugzeugschlepper 4 vorliegend in Abrufbereitschaft, in einer so genannten "On Call"-Phase. Wenn das Flugzeug 1 vom Rollfeld 2 zur Parkposition 3 bewegt wird, befindet sich dieses in der so genannten "Taxi-In"-Phase. An der Parkposition 3 angelangt, erfolgt die Versorgung (Support) des Flugzeugs 1. Aus dieser Parkposition 3 wird das Flugzeug 1 durch den so genannten "Pushback" kurz rückwärts gezogen und anschließend wieder zum Rollfeld 2 bewegt (so genannte "Taxi-Out"-Phase).

In Zeichnungsfigur 2 ist der Flugzeugschlepper 4 zur Bewegung daran angekoppelter Flugzeuge 1 auf Flugfeldern dargestellt, wobei der Flugzeugschlepper 4 ein Antriebsaggregat 5 zum Antrieb wenigstens eines Radsatzes 6, 6', 6" des Flugzeugschleppers 4 sowie wenigstens eine Kupplungseinheit 7 zum Ankoppeln eines Flugzeugteils 8, hier das vordere Rad 11, bzw. Bugrad, des Flugzeugs 1 umfasst. Alternativ oder zusätzlich kann die Kupplungseinheit 7 auch an sonstigen Eingriffselementen am Flugzeug 1 angreifen, z.B. an hierfür vorgesehenen Haken oder Ösen. Auf oder an dem Flugzeugschlepper 4 ist eine absetzbare Energiefunktionseinheit 9 angeordnet, die zumindest im Schleppbetrieb (Taxi-In- und/oder Taxi-Out-Phase) an wenigstens einem Aggregat 10 angekoppelt ist. Die Ankopplung der Energiefunktionseinheit 9 an das wenigstens eine Aggregat 10 des Flugzeuges 1 geschieht vorzugsweise selbsttätig und synchron mit dem Ankoppeln der Kupplungseinheit 7 an das Rad 11 und damit an das Flugzeugteil 8.

Die Schnittstelle zwischen der Energiefunktionseinheit 9 und dem Aggregat 10 des Flugzeugs 1 umfasst vorzugsweise wenigstens einen Energie- und/oder Medienübertragungsadapter (nicht dargestellt). Dieser ist vorzugsweise am Flugzeugschlepper 4 oder der Energiefunktionseinheit 9 angeordnet und wirkt im gekoppelten Zustand mit dem Flugzeug 1 mit einem dort angeordneten Gegenadapter zusammen.

Wenigstens eine Funktion der Energiefunktionseinheit 9 kann zumindest teilweise von wenigstens einer Steuereinheit (nicht dargestellt) des angekoppelten Flugzeuges 1 steuerbar ausgebildet sein. Damit wird es beispielsweise den Flugzeugführern im Cockpit ermöglicht, die Auswahl welcher und die Menge der Energie und/oder der Medien, welcher der Energiefunktionseinheit 9 dem Flugzeug zugeführt oder entnommen werden, zu steuern und/oder zu regeln. Der Flugzeugschlepper 4 weist zum Antrieb zumindest einer seiner Radsätze 6, 6', 6" ein Antriebsaggregat 5 auf, welches von einem am Flugzeugschlepper 4 montierten Batteriesatz 12 gespeist wird. Dieser Batteriesatz 12 des Flugzeugschleppers 4 ist ferner mit einem Ladeeingang versehen, der mit einem Ladeausgang der Energiefunktionseinheit 9 verbunden werden kann, so dass über eine entsprechende Spannungsversorgung Energie von der Energiefunktionseinheit 9 dem Batteriesatz 12 zugeführt werden kann. Das Antriebsaggregat 5 des Flugzeugschleppers 4 ist in diesem Fall vorzugsweise als elektrischer Antriebsmotor ausgebildet, der vom Batteriesatz 12 mit Spannung versorgt wird. Zusätzlich oder alternativ kann es vorgesehen sein, dass bei angekoppelter Energiefunktionseinheit 9 das als elektrischer Antriebsmotor ausgebildete Antriebsaggregat 5 unmittelbar aus der Energiefunktionseinheit 9 versorgt wird.

Im Vergleich der Zeichnungsfiguren 2 und 3 ist in Zeichnungsfigur 3 der Flugzeugschlepper 4 von der Energiefunktionseinheit 9 gelöst, wobei nach Abkoppeln der Energiefunktionseinheit 9 vom Flugzeugschlepper 4 das in der Parkposition 3 befindliche Flugzeug 1 kontinuierlich mit der Energiefunktionseinheit 9 zum Austausch von Energie in Wechselwirkung stehen kann.

Die Energiefunktionseinheit 9 ist Teil einer (nicht explizit gezeigten) Versorgungseinheit, welche mit einem integrierten Brennstoffzellenenergieerzeugungssystem 13 und/oder einer Klimaanlage 14 und/oder einem Medientank 15 (vorzugsweise einem Wassertank) und/oder einem Inertgastank 16 und/oder einem Pufferakku 17 versehen ist. Die aufgezählten Elemente 13, 14, 15, 16 und/oder 17 dienen in erster Linie zur Zuführung von Medien und/oder Energie an die Aggregate 10 des Flugzeugs 1. Darüber hinaus kann aber auch ein Stoff- oder Energieaustausch in umgekehrter Richtung vorgesehen sein, so kann die Versorgungseinheit beispielsweise über einen entsprechenden Medientank 15 Abwasser und/oder verbrauchte Klimaanlagenflüssigkeit oder dergleichen aufnehmen.

Die Energiefunktionseinheit 9 bzw. Versorgungseinheit ist im Bezug auf wenigstens eine Antriebsachse des Flugzeugschleppers 4 lasterhöhend angeordnet. Dies bedeutet, dass die Energiefunktionseinheit 9 bzw. Versorgungseinheit insbesondere während des Schleppbetriebs eines Flugzeugs 1 ein "Gegengewicht" zu den an der Kupplungseinheit 7 am Flugzeugschlepper 4 auftretenden Kräften bildet.

### BEZUGSZEICHENLISTE

- 1: Flugzeug
- 2: Rollfeld
- 3: Parkposition
- 4: Flugzeugschlepper
- 5: Antriebsaggregat v. 4
- 6,6',6": Radsatz
- 7: Kupplungseinheit
- 8: Flugzeugteil
- 9: Energiefunktionseinheit
- 10: Aggregat v. 1
- 11: Rad v. 1
- 12: Batteriesatz v. 4
- 13: Brennstoffzellenenergieerzeugungssystem
- 14: Klimaanlage
- 15: Medientank
- 16: Inertgastank
- 17: Pufferakku

## Patentansprüche

1. Flugzeugschlepper (4) zur bodengebundenen Bewegung daran angekoppelter Flugzeuge (1), insbesondere auf Flugfeldern, mit
- einem Antriebsaggregat (5) zum Antrieb wenigstens eines Radsatzes (6, 6', 6") des Schleppers (4) sowie
- wenigstens einer Kupplungseinheit (7) zum Ankoppeln an einem Flugzeugteil (8),
auf oder an dem Flugzeugschlepper (4) eine Energiefunktionseinheit (9) angeordnet ist, welche, insbesondere im Schleppbetrieb, an wenigstens einen Verbraucher oder ein Aggregat (10) des Flugzeugs (1) ankoppelbar oder angekoppelt ist, so dass das Flugzeug über die Energiefunktionseinheit (9) mit elektrischer Energie versorgt werden kann, **dadurch gekennzeichnet, dass** die Energiefunktionseinheit (9) vom Flugzeugschlepper (4) absetzbar ausgebildet ist derart, dass die mit einem in Parkposition verbrachten Flugzeug (1) verbundene Energiefunktionseinheit (9) vom Flugzeugschlepper (4) abgekoppelt werden kann und das jeweilige Flugzeug (1) weiter versorgt.

2. Flugzeugschlepper nach Anspruch 1,
**dadurch gekennzeichnet, dass**
die Ankopplung der Energiefunktionseinheit (9) an den wenigstens einen Verbraucher oder das wenigstens eine Aggregat (10) des Flugzeugs (1) selbsttätig und/oder synchron mit dem Ankoppeln der Kupplungseinheit (7) an einem Flugzeugteil (8) erfolgt.

3. Flugzeugschlepper nach Anspruch 1 oder 2,
**dadurch gekennzeichnet, dass**
an dem Flugzeugschlepper (4) oder an der Energiefunktionseinheit wenigstens ein Energie- und/oder Medienübertragungsadapter vorgesehen ist, der mit einem Gegenadapter am Flugzeug (1) verbindbar ist.

4. Flugzeugschlepper nach einem der Ansprüche 1 bis 3,
**dadurch gekennzeichnet, dass**
wenigstens eine Funktion der Energiefunktionseinheit (9) zumindest teilweise von wenigstens einer Steuereinheit eines angekoppelten Flugzeuges (1) steuerbar ist.

5. Flugzeugschlepper nach einem der vorhergehenden Ansprüche,
**dadurch gekennzeichnet, dass**
ein Ladeausgang der Energiefunktionseinheit (9) mit einem Ladeeingang eines Batteriesatzes (12) des Flugzeugschleppers (4) verbunden ist und das Antriebsaggregat (5) des Flugzeugschleppers (4) einen elektrischen Antriebsmotor umfasst, der aus dem Batteriesatz (12) gespeist wird.

6. Flugzeugschlepper nach Anspruch 5,
**dadurch gekennzeichnet, dass**
bei angekoppelter Energiefunktionseinheit (9) der elektrische Antriebsmotor unmittelbar aus der Energiefunktionseinheit (9) gespeist wird.

7. Flugzeugschlepper nach Anspruch 3,
**dadurch gekennzeichnet, dass**
die Energiefunktionseinheit (9) vom Flugzeugschlepper (4) unter Lösen der Kupplungseinheit (7) des Flugzeugschleppers (4) und unter Beibehaltung der Kopplung zwischen der Energiefunktionseinheit (9) und Flugzeug absetzbar ist.

8. Flugzeugschlepper nach einem der vorhergehenden Ansprüche,
**dadurch gekennzeichnet, dass**
die Energiefunktionseinheit (9) (9) ein integriertes Brennstoffzellenenergieerzeugungssystem (13) und/oder eine Klimaanlage (14) und/oder einen Medientank (15) und/oder einen Inertgastank (16) umfasst.

9. Flugzeugschlepper nach einem der vorhergehenden Ansprüche,
**dadurch gekennzeichnet, dass**
die Energiefunktionseinheit (9) (9) lasterhöhend in Bezug auf wenigstens eine Antriebsachse des Flugzeugschleppers (4) angeordnet ist.

10. Flugzeugschlepper nach einem der vorhergehenden Ansprüche,
**dadurch gekennzeichnet, dass**
die Energiefunktionseinheit (9), auf oder an einer Ladeadaptionseinheit ab-und/oder ansetzbar ist.

11. Verfahren zum bodengebundenen Bewegen von Flugzeugen (1), insbesondere auf Flugfeldern, wobei ein Flugzeugteil (8) an wenigstens eine Kupplungseinheit (7) eines Flugzeugschleppers (4) angekoppelt wird,
der die bodengebundene Bewegung des Flugzeuges (1), insbesondere von einer Parkposition (8) zu einer Startposition (Taxi-Out) und/oder von einer Landeposition zu einer Parkposition (8) (Taxi-In), mit angekoppelten Flugzeugschlepper (4) unter ausschließlichem Antrieb eines Antriebsaggregates (5) des Flugzeugschleppers (4) erfolgt und Flugzeugaggregate (10) und/oder Flugzeugverbraucher an eine Energiefunktionseinheit (9) des Flugzeugschleppers (4) angekoppelt sind bzw. werden, wobei die Energiefunktionseinheit (9) vom Flugzeugschlepper (4) absetzbar ausgebildet ist derart, dass die mit einem in Parkposition verbrachten Flugzeug (1) verbundene Energiefunktionseinheit (9) vom Flugzeugschlepper (4) abgekoppelt werden kann und das jeweilige Flugzeug (1) weiter versorgt.

12. Verfahren nach Anspruch 11, **wobei**
die Energiefunktionseinheit (9), unter Aufrechterhaltung der Ankopplung derselben an das Flugzeug (1) vom Flugzeugschlepper (4) abgesetzt und/oder eine, insbesondere an das Flugzeug angekoppelte, abgesetzte Energiefunktionseinheit (9), von diesem aufgenommen wird.

13. Verfahren nach Anspruch 11 oder 12, wobei
zwischen der Energiefunktionseinheit (9) und dem Flugzeug (1), unidirektional und/oder bidirektional, Energie, insbesondere elektrische Energie, elektrische Signale, und/oder Betriebsmittel, insbesondere gasförmige und/oder flüssige Medien, insbesondere zur Klimatisierung und/oder Befüllung und/oder Leerung von Medientanks (15), übertragen oder ausgetauscht wird/werden

14. Verfahren nach einem der Ansprüche 11 bis 13, wobei
ein Austausch zwischen Energiefunktionseinheit (9) und Flugzeug (1), insbesondere die Zu- und/oder Abführung der Medien und/oder die Versorgung elektrischer Einheiten des Flugzeuges (1), während des Schleppvorganges (Taxi-In und Taxi-Out) und/oder während einer Standphase des Flugzeuges (1) erfolgt.

## Claims

1. Aircraft tug (4) for moving aircraft (1) which are coupled to it on the ground, in particular on airfields, comprising
- a drive assembly (5) for driving at least one set (6, 6', 6") of wheels of the tug (4) and also
- at least one coupling unit (7) for coupling to an aircraft part (8),
wherein a functional energy unit (9) is arranged on the aircraft tug (4), which functional energy unit, in particular during towing, can be coupled or is coupled to at least one load or one assembly (10) of the aircraft (1) such that electrical energy can be supplied to the aircraft via the functional energy unit (9), **characterized in that** the functional energy unit (9) is designed such that it can be removed from the aircraft tug (4) in such a way that the functional energy unit (9) which is connected to an aircraft (1) which is in a park position can be uncoupled from the aircraft tug (4) and continues to supply the respective aircraft (1).

2. Aircraft tug according to Claim 1, **characterized in that** the functional energy unit (9) is coupled to the at least one load or the at least one assembly (10) of the aircraft (1) automatically and/or in synchronism with the coupling of the coupling unit (7) to an aircraft part (8).

3. Aircraft tug according to Claim 1 or 2, **characterized in that** at least one energy and/or media transfer adapter is provided on the aircraft tug (4) or on the functional energy unit, which energy and/or media transfer adapter can be connected to a mating adapter on the aircraft (1).

4. Aircraft tug according to one of Claims 1 to 3, **characterized in that** at least one function of the functional energy unit (9) can be controlled at least partially by at least one control unit of a coupled aircraft (1).

5. Aircraft tug according to one of the preceding claims, **characterized in that** a charging output of the functional energy unit (9) is connected to a charging input of a battery pack (12) of the aircraft tug (4), and the drive assembly (5) of the aircraft tug (4) comprises an electric drive motor which is fed from the battery pack (12).

6. Aircraft tug according to Claim 5, **characterized in that** the electric drive motor is fed directly from the functional energy unit (9) when the functional energy unit (9) is coupled.

7. Aircraft tug according to Claim 3, **characterized in that** the functional energy unit (9) can be removed from the aircraft tug (4) by releasing the coupling unit (7) of the aircraft tug (4) and while maintaining the coupling between the functional energy unit (9) and the aircraft.

8. Aircraft tug according to one of the preceding claims, **characterized in that** the functional energy unit (9) comprises an integrated fuel cell energy generation system (13) and/or a climate control system (14) and/or a media tank (15) and/or an inert gas tank (16).

9. Aircraft tug according to one of the preceding claims, **characterized in that** the functional energy unit (9) is arranged so as to increase the load in relation to at least one drive axle of the aircraft tug (4).

10. Aircraft tug according to one of the preceding claims, **characterized in that** the functional energy unit (9) can be removed from and/or mounted on a charging adapter unit.

11. Method for moving aircraft (1) on the ground, in particular on airfields, wherein an aircraft part (8) is coupled to at least one coupling unit (7) of an aircraft tug (4), wherein the aircraft (1) is moved on the ground, in particular from a park position (8) to a start position (taxi out) and/or from a landing position to a park position (8) (taxi in), by a coupled aircraft tug (4) in a manner driven exclusively by a drive assembly (5) of the aircraft tug (4), and aircraft assemblies (10) and/or aircraft loads are or will be coupled to a functional energy unit (9) of the aircraft tug (4), wherein the functional energy unit (9) is designed such that it can be removed from the aircraft tug (4) in such a way that the functional energy unit (9) which is connected to an aircraft (1) which is in a park position can be uncoupled from the aircraft tug (4) and continues to supply the respective aircraft (1).

12. Method according to Claim 11, wherein the functional energy unit (9) is removed from the aircraft tug (4) while maintaining coupling of the said functional energy unit to the aircraft (1), and/or a removed functional energy unit (9), in particular which is coupled to the aircraft, is received by the said aircraft tug.

13. Method according to Claim 11 or 12, wherein energy, in particular electrical energy, electrical signals and/or operating agents, in particular gaseous and/or liquid media, in particular for controlling the climate of and/or filling and/or emptying media tanks (15), is/are transferred or exchanged between the functional energy unit (9) and the aircraft (1) in a unidirectional and/or bidirectional manner.

14. Method according to one of Claims 11 to 13, wherein exchange between the functional energy unit (9) and the aircraft (1), in particular the supply and/or discharge of the media and/or the supply to electrical units of the aircraft (1), takes place during the towing process (taxi in and taxi out) and/or during a stationary phase of the aircraft (1).

## Revendications

1. Tracteur d'avion (4) destiné au déplacement au sol d'avions (1) accouplés à celui-ci, en particulier sur des tarmacs, comprenant
- un groupe motopropulseur (5) pour l'entraînement d'au moins un train de roues (6, 6', 6'') du tracteur (4) et
- au moins une unité d'accouplement (7) pour l'accouplement à une partie de l'avion (8),
une unité fonctionnelle d'énergie (9) étant disposée sur ou au niveau du tracteur d'avion (4), laquelle, notamment en mode de traction, peut être accouplée ou est accouplée à au moins un consommateur ou à un groupe (10) de l'avion (1), de telle sorte que l'avion puisse être alimenté en énergie électrique par le biais de l'unité fonctionnelle d'énergie (9), **caractérisé en ce que** l'unité fonctionnelle d'énergie (9) est réalisée de manière à pouvoir être détachée du tracteur d'avion (4) de telle sorte que l'unité fonctionnelle d'énergie (9) connectée à un avion (1) amené dans une position de stationnement puisse être désaccouplée du tracteur d'avion (4) et continue d'alimenter ledit avion (1).

2. Tracteur d'avion selon la revendication 1,
**caractérisé en ce que**
l'accouplement de l'unité fonctionnelle d'énergie (9) à l'au moins un consommateur ou à l'au moins un groupe (10) de l'avion (1) se produit automatiquement et/ou de manière synchronisée avec l'accouplement de l'unité d'accouplement (7) à une partie de l'avion (8).

3. Tracteur d'avion selon la revendication 1 ou 2,
**caractérisé en ce**
**qu'**au moins un adaptateur de transfert d'énergie et/ou de milieu est prévu au niveau du tracteur d'avion (4) ou au niveau de l'unité fonctionnelle d'énergie, lequel adaptateur peut être connecté à un adaptateur conjugué sur l'avion (1).

4. Tracteur d'avion selon l'une quelconque des revendications 1 à 3,
**caractérisé en ce**
**qu'**au moins une fonction de l'unité fonctionnelle d'énergie (9) peut être commandée au moins en partie par au moins une unité de commande d'un avion (1) accouplé.

5. Tracteur d'avion selon l'une quelconque des revendications précédentes,
**caractérisé en ce**
**qu'**une sortie de charge de l'unité fonctionnelle d'énergie (9) est connectée à une entrée de charge d'un bloc de batteries (12) du tracteur d'avion (4) et le groupe motopropulseur (5) du tracteur d'avion (4) comprend un moteur d'entraînement électrique qui est alimenté à partir du bloc de batteries (12).

6. Tracteur d'avion selon la revendication 5,
**caractérisé en ce que**
lorsque l'unité fonctionnelle d'énergie (9) est accouplée, le moteur d'entraînement électrique est alimenté directement à partir de l'unité fonctionnelle d'énergie (9).

7. Tracteur d'avion selon la revendication 3,
**caractérisé en ce que**
l'unité fonctionnelle d'énergie (9) peut être détachée du tracteur d'avion (4) en desserrant l'unité d'accouplement (7) du tracteur d'avion (4) et en conservant l'accouplement entre l'unité fonctionnelle d'énergie (9) et l'avion.

8. Tracteur d'avion selon l'une quelconque des revendications précédentes,
**caractérisé en ce que**
l'unité fonctionnelle d'énergie (9) comprend un système de génération d'énergie à pile à combustible (13) et/ou une installation de climatisation (14) et/ou un réservoir de milieu (15) et/ou un réservoir de gaz inerte (16).

9. Tracteur d'avion selon l'une quelconque des revendications précédentes,
**caractérisé en ce que**
l'unité fonctionnelle d'énergie (9) est disposée de manière à augmenter la charge par rapport à au moins un essieu moteur du tracteur d'avion (4).

10. Tracteur d'avion selon l'une quelconque des revendications précédentes,
**caractérisé en ce que**
l'unité fonctionnelle d'énergie (9) peut être détachée et/ou attachée sur ou au niveau d'une unité d'adaptation de charge.

11. Procédé destiné au déplacement au sol d'avions (1), en particulier sur des tarmacs, dans lequel une partie de l'avion (8) est accouplée à au moins une unité d'accouplement (7) d'un tracteur d'avion (4),
le déplacement au sol de l'avion (1), en particulier depuis une position de stationnement (8) à une position de décollage (Taxi-Out) et/ou depuis une position d'atterrissage à une position de stationnement (8) (Taxi-In) s'effectue, avec le tracteur d'avion (4) accouplé, par entraînement exclusivement par un groupe motopropulseur (5) du tracteur d'avion (4), et des groupes de l'avion (10) et/ou des consommateurs de l'avion sont accouplés à une unité fonctionnelle d'énergie (9) du tracteur d'avion (4), l'unité fonctionnelle d'énergie (9) étant réalisée de manière à pouvoir être détachée du tracteur d'avion (4) de telle sorte que l'unité fonctionnelle d'énergie (9) connectée à un avion (1) amené dans une position de stationnement puisse être désaccouplée du tracteur d'avion (4) et continue d'alimenter ledit avion (1).

12. Procédé selon la revendication 11, dans lequel l'unité fonctionnelle d'énergie (9), en conservant son accouplement à l'avion (1), est détachée du tracteur d'avion (4) et/ou une unité fonctionnelle d'énergie (9) détachée, notamment accouplée à l'avion, est reçue par celui-ci.

13. Procédé selon la revendication 11 ou 12, dans lequel
de l'énergie, en particulier de l'énergie électrique, des signaux électriques, et/ou des moyens fonctionnels, en particulier des milieux gazeux et/ou liquides, en particulier pour la climatisation et/ou le remplissage et/ou la vidange d'un réservoir de milieu (4), est/sont transmis(e) ou échangés entre l'unité fonctionnelle d'énergie (9) et l'avion (1), de manière unidirectionnelle et/ou bidirectionnelle.

14. Procédé selon l'une quelconque des revendications 11 à 13, dans lequel
un échange entre l'unité fonctionnelle d'énergie (9) et l'avion (1), en particulier l'alimentation et/ou l'évacuation des milieux et/ou l'alimentation d'unités électriques de l'avion (1), se produit pendant l'opération de remorquage (Taxi-In et Taxi-Out) et/ou pendant une phase d'arrêt de l'avion (1).
